# EUROPÄISCHE PATENTSCHRIFT

(11) **EP 3 763 035 B1**
(45) Veröffentlichungstag und Bekanntmachung des Hinweises auf die Patenterteilung: **19.06.2024**
(21) Anmeldenummer: 20706097.1
(22) Anmeldetag: 28.01.2020
(51) Int. Cl.: H02S 30/00, F24S 25/60

(54) **ENDKLEMME ZUR BEFESTIGUNG EINES GERAHMTEN PV-MODULS**
END CLAMP FOR FASTENING A FRAMED PV MODULE
BORNE D'EXTRÉMITÉ POUR FIXER UN MODULE PHOTOVOLTAÏQUE DOTÉ D'UN CADRE

(30) Priorität: 05.09.2019 WO PCT/EP2019/073731
(43) Veröffentlichungstag der Anmeldung: 13.01.2021
(60) Teilanmeldung: 23198356.0
(73) Patentinhaber: AEROCOMPACT Group Holding AG, 1010 Wien (AT)
(72) Erfinder: MUTHER, Mathias, 6822 Röns (AT)
(74) Vertreter: Patent- und Rechtsanwälte Behrmann Wagner PartG mbB
(86) Internationale Anmeldenummer: PCT/EP2020/051969
(87) Internationale Veröffentlichungsnummer: WO 2020/187472

(56) Entgegenhaltungen:
- EP-A2- 2 592 365
- WO-A1-2016/145419
- CN-A- 102 290 465
- US-A1- 2011 260 027
- US-A1- 2017 302 221
- US-A1- 2018 342 974
- US-B1- 9 837 955

## Beschreibung

Die Erfindung betrifft eine Endklemme zur Befestigung gerahmter PV-Module nach dem Oberbegriff des Anspruchs 1.

Zur Befestigung von PV-Modulen auf den Tragprofilen einer Tragkonstruktion sind aus dem Stand der Technik Modulklemmen bekannt. Abhängig von der Platzierung der Modulklemmen an den PV-Modulen kommen Mittelklemmen oder Endklemmen zum Einsatz. Die Mittelklemmen dienen dazu zwischen zwei benachbarten PV-Modulen angeordnet zu werden, so dass die Modulklemme beide PV-Module an deren Rahmen beklemmen kann. Endklemmen werden dagegen am Rand von Modulfeldern eingesetzt und dienen zur Fixierung des Rahmens von nur einem PV-Modul.

Gattungsgemäß umfasst die Endklemme ein Konsolenelement, mit dem die Endklemme am Tragprofil der Tragkonstruktion fixierbar ist. Weiter umfasst die Endklemme einen Klemmbügel, mit dem der Rahmen des PV-Moduls niedergehalten wird. Dazu ist am Klemmbügel eine Klemmfläche vorgesehen, die an einer entsprechenden Fläche des Rahmens des PV-Moduls zur Anlage kommt.

Durch die Klemmkräfte in der Klemmfläche wirken auf den Klemmbügel erhebliche Drehmomente. Diese Drehmomente werden bei Mittelklemmen symmetrisch eingeleitet und neutralisieren sich dadurch. Bei Endklemmen fehlt diese symmetrische Einleitung der Klemmkraft, so dass der Klemmbügel deshalb eine zusätzliche Stützfläche aufweist, mit der der Klemmbügel seitlich an einer Kontaktfläche des Konsolenelements abgestützt werden kann. Auf diese Weise wird das von der Klemmkraft verursachte Drehmoment abgefangen und neutralisiert.

Zwischen dem Klemmbügel und der Konsole steht eine Spannschraube im Eingriff. Durch Anziehen der Spannschraube kann der Klemmbügel gegen die Konsole gespannt werden, um auf diese Weise den Rahmen des PV-Moduls gegen das Tragprofil zu drücken und auf diese Weise zu fixieren.

Nachteilig an den bekannten Endklemmen ist es, dass mit den gattungsgemäßen Endklemmen im Wesentlichen nur eine Normalkraft auf den Rahmen des PV-Moduls ausgeübt werden kann, der parallel zur Längsachse der Spannschraube gerichtet ist. Diese von den bekannten Endklemmen aufgebrachte Normalkraft drückt den Rahmen des PV-Moduls im Wesentlichen ausschließlich von oben gegen das Tragprofil. Eine seitlich auf den Rahmen des PV-Moduls wirkende Kraft, mit der der Rahmen parallel zum Tragprofil gegen die gegenüberliegenden Modulklemmen gedrückt wird, kann mit den bekannten Endklemmen nicht aufgebracht werden. Insofern muss eine exakte Ausrichtung der PV-Module vor dem Anziehen der Spannschrauben von Hand vorgenommen werden.

Die EP 2 592 365 A2 betrifft Endklemmen für gerahmte Photovoltaikmodule, mit einem Klemmwinkel, einem Spannbolzen und einem Basiselement, sowie einem Tragprofil zur Aufnahme des Basiselements, wobei an dem Klemmwinkel und an dem Basiselement eine Zahnung oder Profilierung vorgesehen ist, die eine Höhenverstellbarkeit sowie Arretierung des Klemmwinkels ermöglichen soll. Die Zahnung ist dabei so ausgerichtet, dass ein Formschluss zwischen dem Klemmwinkel und dem Basiselement entsteht, der selbst vor dem Erreichen einer Sicherungs- oder Klemmposition des Klemmwinkels ein Abgleiten oder eine Annäherung des Klemmwinkels in Richtung des Tragprofils ausschließt oder verhindert.

Die US 9,837,955 B1 offenbart ebenfalls Klemmen für Photovoltaikmodule, wobei ein Klemmwinkel mit einer Mutter und einem Stehbolzen gesichert wird. Dabei wird der Stehbolzen in einer bodenseitigen Profilführung aufgenommen.

Auch die US 2017/0302221 A1 lehrt Endklemmen für Photovoltaikmodule mit einem Klemmwinkel, einem Basiselement und einer Spannschraube. Auch das Basiselement der D3 weist Eingriffsvertiefungen auf, in die ein endseitiger Profil-Vorsprung des Klemmwinkels eingreifen kann. Die Eingriffsvertiefungen und der Profilvorsprung sind dabei so ausgeführt, dass ein Formschluss zwischen dem Klemmwinkel und dem Basiselement entsteht, der selbst vor dem Erreichen einer Sicherungs- oder Klemmposition des Klemmwinkels ein Abgleiten oder eine Annäherung des Klemmwinkels in Richtung des Tragprofils ausschließt oder verhindert.

Auch die WO 2016/145419 A1 betrifft Klemmen für gerahmte Photovoltaikmodule, die im Wesentlichen nach dem Prinzip der Entgegenhaltungen vorangehend genannten Druckschriften zum Stand der Technik aufgebaut sind. Im Basiselement der Klemmen der WO 2016/145419 A1 ist ein Nutstein oder Formstein vorgesehen, der sich beim Anziehen der Spannschraube an einem Innenprofil des Basiselements verkannten und somit für eine Sicherung der Spannschraube sorgen kann.

Im Youtube-Video 'Hopergy Ultimate end clamp installation', aufrufbar unter https://www.youtube.com/watch?v=XCwh81ellAs wird eine Endklemme gezeigt, welche einen Klemmbügel hat, der durch Anziehen einer Spannschraube gegen ein Photovoltaikmodul gespannt werden kann.

Ausgehend von diesem Stand der Technik ist es deshalb Aufgabe der vorliegenden Erfindung eine neue Endklemme vorzuschlagen, die die oben beschriebenen Nachteile vermeidet.

Diese Aufgabe wird durch eine Endklemme nach der Lehre des Anspruchs 1 gelöst.

Vorteilhafte Ausführungsformen der Erfindung sind Gegenstand der Unteransprüche.

Am Klemmbügel der erfindungsgemäßen Endklemme ist an der Stützfläche zumindest ein Rastelement vorgesehen, das an einem formkomplementären Gegenrastelement in der Kontaktfläche des Konsolenelements kraftschlüssig und/oder reibschlüssig fixierbar ist. Durch den Kraft-oder Reibschluss zwischen Rastelement und Gegenrastelement ist gewährleistet, dass eine Annäherung der Stützfläche des Klemmbügels in Richtung des Tragprofils ausgeschlossen ist. Dies bedeutet mit anderen Worten, dass sobald Kraft-oder Reibschluss zwischen den Rastelementen und den Gegenrastelementen aufgebaut ist, kann der Stützbügel nicht mehr in Richtung des Tragbügels verschoben werden. Bei den Montagearbeiten wird deshalb der Klemmbügel zunächst locker auf den Rahmen des PV-Moduls aufgelegt, wobei die Rastelemente im Wesentlichen ohne Andruck auf den Gegenrastelementen aufliegen. Wird nun anschließend die Spannschraube angezogen, kann der Tragbügel solange in Richtung des Tragprofils rutschen bis aufgrund des ansteigenden Andrucks ein die weitere Verstellung ausschließender Kraft- oder Reibschluss zwischen den Rastelementen und den Gegenrastelementen aufgebaut ist. Nach Aufbau des Kraft- oder Reibschlusses zwischen den Rastelementen und den Gegenrastelementen kann der Tragbügel dann nicht mehr in Richtung des Tragprofils rutschen, so dass auf den Klemmbügel ein Kippmoment wirkt. Dieses Kippmoment ist abhängig von der Höhe der Spannkraft der Spannschraube und zieht den Klemmbügel quer zu der in der Klemmfläche aufgebrachten Klemmkraft in Richtung des Rahmens des PV-Moduls. Im Ergebnis kann also beim Anziehen der Spannschraube sowohl eine parallel zur Längsachse der Spannschraube wirkende Klemmkraft, als auch eine im Wesentlichen rechtwinklig dazu wirkende seitliche Schubkraft aufgebracht werden. Durch diese Schubkraft wird das PV-Modul soweit parallel zum Tragprofil verschoben, bis jegliches Spiel in horizontaler Richtung parallel zum Tragprofil entfernt ist.

Die Rahmen der PV-Module können abhängig von der Bauart unterschiedliche Höhen aufweisen. So sind PV-Module mit einer Höhe im Bereich zwischen 20 bis 50 mm bekannt. Um PV-Module mit unterschiedlicher Höhe mit jeweils baugleichen Endklemmen befestigen zu können, ist es vorteilhaft, wenn die Anzahl der Gegenrastelemente in der Kontaktfläche des Konsolenelements größer als die Anzahl der Rastelemente an der Stützfläche des Klemmbügels ist. Auf diese Weise kann dann bei der Montage der Endklemme der Klemmbügel in unterschiedlichen Positionen am Konsolenelement eingerastet werden, um dadurch die unterschiedlichen Höhen des Rahmens der PV-Module auszugleichen.

In welcher Art die Rastelemente und Gegenrastelemente konstruktiv ausgebildet sind, ist grundsätzlich beliebig. Gemäß einer bevorzugten Ausführungsform sind die Rastelemente und Gegenrastelemente in der Art einer formkomplementären Verzahnung ausgebildet. Solche Verzahnungen lassen sich bei der Herstellung von Aluminiumprofilkörpern, aus denen die Klemmbügel bzw. Konsolenelemente üblicherweise hergestellt werden, problemlos realisieren.

Im Hinblick auf die kraft- und/oder reibschlüssige Fixierung des Klemmbügels am Konsolenelement ohne das es dabei zu einem Formschluss kommt, ist es vorteilhaft, wenn die Verzahnung winkelig von der Stützfläche des Klemmbügels absteht und die freien Enden der Verzahnung in Richtung der Klemmfläche am Klemmbügel weisen. Auf diese Weise wird der Klemmbügel nur bei Aufbringung eines entsprechend großen Andrucks zwischen den Rastelementen und den Gegenrastelementen am Konsolenelement fixiert. Wirkt hingegen kein oder lediglich ein kleiner Andruck zwischen den Rastelementen und den Gegenrastelementen so kann der Klemmbügel problemlos relativ zum Konsolenelement verschoben werden.

Auf den Klemmbügel der erfindungsgemäßen Endklemme drückt beim Anziehen der Spannschraube ein Kippmoment, das den Klemmbügel in Richtung des Rahmens des PV-Moduls drückt. Um eine seitliche Kraft mit diesem Kippmoment auf den Rahmen des PV-Moduls zu bewirken, ist es besonders vorteilhaft, wenn die Klemmfläche des Klemmbügels zwei Klemmflächenabschnitte umfasst, die rechtwinklig zueinander verlaufen und eine Eckkante des Tragprofils umgreifen können. Mit dem ersten Klemmflächenabschnitt kann dann die in Richtung der Längsachse der Spannschraube wirkende Klemmkraft auf die Oberseite des Rahmens ausgeübt werden, wohingegen mit dem zweiten Klemmflächenabschnitt die seitlich auf den Rahmen des PV-Moduls wirkende Schubkraft ausgeübt wird.

Um eine zumindest geringfügige Kippbewegung des Klemmbügels beim Anziehen der Spannschraube zu ermöglichen, ist es vorteilhaft, wenn die Stützfläche des Klemmbügels einen Überstand gegenüber der zur Spannschraube weisenden Innenseite des Klemmbügels aufweist. Durch diesen Überstand wird eine Freischnitt an der Innenseite des Klemmbügels realisiert, so dass die gewünschte leichte Kippbewegung des Klemmbügels relativ zum Konsolenelement nicht gesperrt wird.

Erfindungsgemäß ist es vorgesehen, dass das Konsolenelement zwei elastisch federnd angelegte Spreizhaken umfasst, die in einer Ausnehmung des Tragprofils befestigbar sind. Die Spreizhaken weisen dazu jeweils ein Hakenelement auf, das den Rand der Ausnehmung fixierend hintergreifen kann. Bei der Montage des Konsolenelements am Tragprofil sind die Spreizhaken von oben in die Ausnehmung des Tragprofils eingesteckt und federn dabei elastisch zusammen. Sobald die Hakenelemente die Wandung am Rand des Tragprofils hintergreifen, federn die Spreizhaken elastisch zurück und fixieren auf diese Weise das Konsolenelement am Tragprofil. Soll das Konsolenelement wieder demontiert werden, können die beiden Spreizhaken elastisch federnd zusammengedrückt werden, um auf diese Weise den Hintergriff der Hakenelemente am Rand der Ausnehmung zu lösen.

Um ein ungewolltes Lösen der Spreizhaken des Konsolenelements vom Tragprofil auszuschließen, ist weiterhin erfindungsgemäß vorgesehen, dass zwischen den beiden Spreizhaken ein Zwischenraum gebildet ist, in den die Spannschraube beim Spannen der Endklemme eingeführt wird. Auf der zur Spannschraube weisenden Innenseite der Spreizhaken ist jeweils zumindest ein Blockadesteg angeformt. Die einander gegenüberliegenden Blockadestege können nach dem Einschrauben der Spannschraube in den Zwischenraum mit ihrem freien Ende am Gewindegang der Spannschraube zur Anlage kommen. Durch diese Anlage der Blockadestege an der Spannschraube wird das Zusammendrücken der Spreizhaken blockiert und damit eine ungewollte Demontage des Konsolenelements vom Tragprofil ausgeschlossen.

Weiter ist es besonders vorteilhaft, wenn der Durchmesser des Gewindegangs der Spannschraube geringfügig größer ist als der Abstand zwischen den freien Enden der gegenüberliegenden Blockadestege. Auf diese Weise können die Blockadestege beim Einschrauben der Spannschraube durch den etwas größeren Durchmesser des Gewindegangs zumindest geringfügig auseinandergedrückt und dadurch die Hakenelemente beim Hintergriff des Rands der Ausnehmung im Tragprofil gesichert werden.

In welcher Weise der Klemmbügel selbst konstruktiv ausgebildet ist, ist wiederum grundsätzlich beliebig. Am ersten Bügelarm wird die Klemmfläche des Klemmbügels angeordnet, wohingegen am zweiten Bügelarm die Stützfläche angeordnet ist.

Um das Kippen des Klemmbügels seitlich gegen den Rahmen des PV-Moduls zu unterstützen, ist es wiederum besonders vorteilhaft, wenn der von den beiden Bügelarmen des Klemmbügels eingeschlossene Zwischenwinkel kleiner oder größer 90 Grad ist. Durch diese Winkelabweichung gegenüber dem rechten Winkel wird das Abkippen des Klemmbügels unterstützt. Der von den beiden Bügelarmen eingeschlossene Zwischenwinkel sollte bevorzugt im Bereich zwischen 89 Grad und 85 Grad oder im Bereich zwischen 91 Grad und 95 Grad liegen.

Um eine elektrostatische Aufladung der PV-Module zu verhindern, muss regelmäßig eine Erdung der Rahmen vorgesehen werden. Diese Erdung kann in einfacher Weise dadurch realisiert werden, dass am Klemmbügel der Endklemme ein Erdungselement vorgesehen ist, mit dem ein elektrisch leitender Kontakt zwischen dem Klemmbügel und dem Rahmen des PV-Moduls herstellbar ist. Auf diese Weise kann durch Anbringung der Endklemme ein elektrisch leitender Kontakt zwischen dem Tragprofil der Tragkonstruktion und dem Rahmen des PV-Moduls hergestellt werden.

In welcher Weise das Erdungselement konstruktiv ausgebildet ist, ist wiederum grundsätzlich beliebig. Besonders einfach und kostengünstig kann das Erdungselement realisiert werden, wenn dieses in der Art einer Kontaktschraube ausgebildet ist, deren dem Schraubenkopf gegenüberliegendes Ende eine Spitze aufweist. Durch Einschrauben der Kontaktschraube kann diese Spitze dann in die Oberfläche des Rahmens des PV-Moduls eingedrückt und auf diese Weise ein zuverlässiger elektrischer Kontakt hergestellt werden.

Bevorzugt sollte die Spitze der Kontaktschraube in der Klemmfläche des Klemmbügels angeordnet sein. Denn in der Klemmfläche ist eine im Wesentlichen spielfreie Anlage des Klemmbügels am Rahmen des PV-Moduls gewährleistet, so dass die Spitze der Kontaktschraube problemlos in die Oberfläche des Rahmens des PV-Moduls eingedrückt werden kann.

Eine Ausführungsform der erfindungsgemäßen Endklemme ist in den Zeichnungen schematisiert dargestellt und wird nachfolgend beispielhaft erläutert.

Es zeigen:
- **Fig. 1**: eine erfindungsgemäße Endklemme in perspektivischer seitlicher Ansicht;
- **Fig. 2**: die Endklemme gemäß Fig. 1 in einer seitlichen Ansicht;
- **Fig. 3**: die Endklemme gemäß Fig. 2 nach Montage eines PV-Moduls an einem Tragprofil in seitlicher Ansicht;
- **Fig. 4**: die Endklemme gemäß Fig. 1 in einer zweiten seitlichen Ansicht;
- **Fig. 5**: die Endklemme gemäß Fig. 1 in Ansicht von oben;

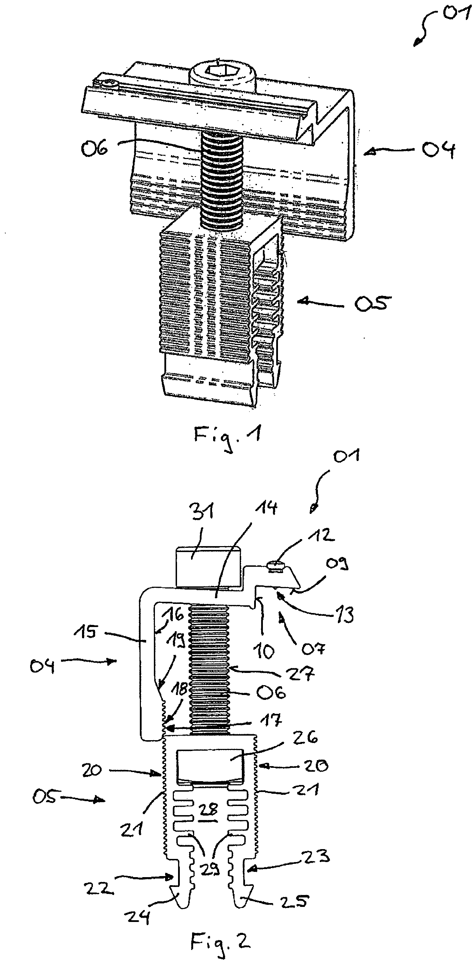

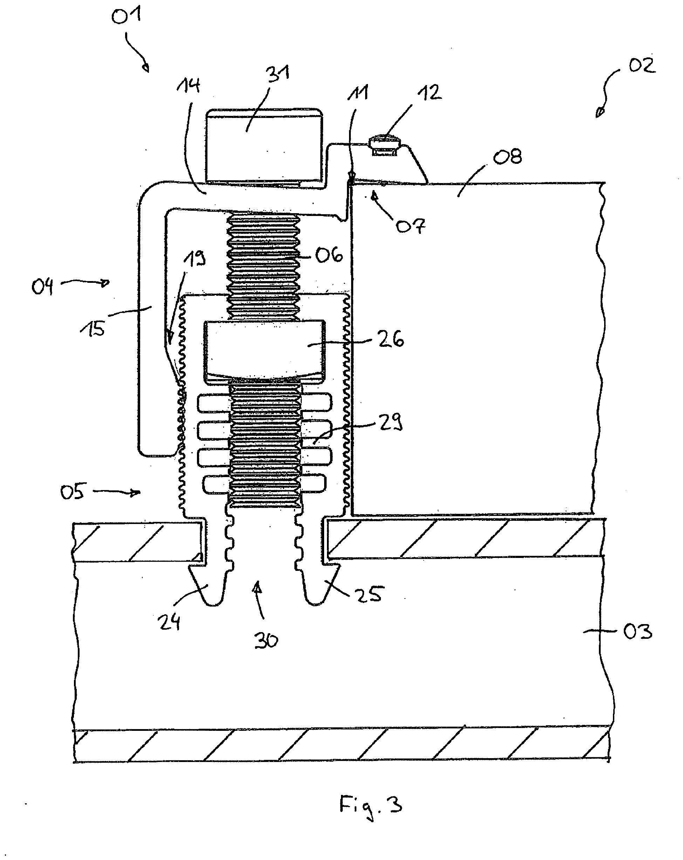

**Fig. 1** zeigt eine Endklemme 01 zur Befestigung eines gerahmten PV-Moduls 02 (siehe Fig. 3) an einem Tragprofil 03 (siege Fig. 3) in perspektivischer Ansicht. Die Endklemme 01 umfasst einen Klemmbügel 04 und ein Konsolenelement 05. Eine Spannschraube 06 steht mit dem Klemmbügel 04 und dem Konsolenelement 05 in Eingriff, um den Klemmbügel 04 gegen das Konsolenelement 05 spannen zu können.

**Fig. 2** zeigt die Endklemme 01 in seitlicher Ansicht. Am Klemmbügel 04 ist eine Klemmfläche 07 vorgesehen, die am Rahmen 08 (siehe Fig. 3) des PV-Moduls 02 beklemmend zur Anlage gebracht werden kann. Die Klemmfläche 07 umfasst zwei Klemmflächenabschnitte 09 und 10, die rechtwinklig zueinander angeordnet sind. Auf diese Weise kann die Klemmfläche 07 eine Eckkante 11 (siehe Fig. 3) des Rahmens 08 umfassen.

Außerdem ist am Klemmbügel 04 eine Kontaktschraube 12 vorgesehen, die als Erdungselement dient und mit der ein elektrischer Kontakt zwischen dem Klemmbügel 04 und dem Rahmen 08 des PV-Moduls 02 hergestellt werden kann. Die Kontaktschraube 12 durchgreift die Wandung des Klemmbügels 04 und weist am zum Rahmen 08 weisenden Ende eine Spitze 13 auf, die durch Einschrauben der Kontaktschraube 12 in die Oberfläche des Rahmens 08 eingedrückt werden kann.

Konstruktiv umfasst der Klemmbügel 04 zwei winkelig zueinander verlaufende Bügelarme 14 und 15. Die Bügelarme 14 und 15 weisen einen Zwischenwinkel von kleiner 90 Grad, beispielsweise einen Zwischenwinkel von 87 Grad auf. Durch diese geringfügige Winkelabweichung zum rechten Winkel wird das Kippen des Bügelarms 04 in Richtung des Rahmens 08 unterstützt.

Am unteren Ende des Bügelarms 15 ist auf der Innenseite 16 des Bügelarms 04 eine Stützfläche 17 vorgesehen, an der mehrere Rastelemente 18 angeformt sind. Die Stützfläche 17 weist einen geringfügigen Überstand 19 gegenüber der Innenseite 16 auf, um eine zumindest geringfügige Kippbewegung des Klemmbügels 04 zu ermöglichen. An dem C-förmig ausgebildeten Konsolenelement 05 ist auf zwei Seiten jeweils eine Kontaktfläche 20 vorhanden, an der die Stützfläche 17 des Klemmbügels 04 abstützend zur Anlage kommen kann. An den Klemmflächen 20 sind jeweils Gegenrastelemente 21 angeformt. Die Rastelemente 18 und Gegenrastelemente 21 können kraftschlüssig und/oder reibschlüssig aneinander zur Anlage gebracht werden, was nachfolgend noch anhand der Darstellung in Fig. 3 näher erläutert wird.

Weiter umfasst das Konsolenelement 05 zwei Spreizhaken 22 und 23, die jeweils elastisch federnd angelenkt sind. An den beiden Spreizhaken 22 und 23 ist jeweils ein Hakenelement 24 bzw. 25 vorgesehen mit denen das Konsolenelement 05 am Tragprofil 03 befestigt werden kann. Auch dies soll nachfolgend anhand der Darstellung in Fig. 3 noch näher erläutert werden.

Zwischen den Spreizhaken 22 und 23 ist eine Mutter 26 formschlüssig gefasst, in die der Gewindegang 27 der Spannschraube 06 zum Spannen der Endklemme 01 eingeschraubt werden kann. Zwischen den beiden Spreizhaken 22 und 23 ist ein Zwischenraum 28 gebildet, der die Spannschraube 06 nach dem Einschrauben der Spannschraube 06 in die Mutter 26 aufnimmt. Auf der zur Spannschraube 06 weisenden Innenseite der Spreizhaken 22 und 23 sind jeweils mehrere Blockadestege 29 vorgesehen, die mit ihrem freien Ende am Gewindegang 27 der Spannschraube 06 nach dem Einschrauben der Spannschraube 06 in die Mutter 26 zur Anlage kommen können. Auf diese Weise kann das Zusammendrücken der Spreizhaken 22 und 23 nach dem Einschrauben der Spannschraube 06 in die Mutter 26 blockiert werden.

**Fig. 3** zeigt die Endklemme 01 nach der Befestigung des Konsolenelements 05 an einem Tragprofil 03 und der anschließenden Montage des Rahmens 08 eines PV-Moduls 02 durch Spannen der Endklemme 01. Die Hakenelemente 24 und 25 hintergreifen den Rand einer Ausnehmung 30 im Tragprofil 03 und fixieren auf diese Weise das Konsolenelement 05 am Tragprofil 03. Durch elastisches Rückfedern der Spreizhaken 22 und 23 wird zunächst eine vorläufige Lagesicherung realisiert. Wird dann anschließend die Spannschraube 06, deren Gewindegang 27 einen größeren Durchmesser als den Abstand zwischen den freien Enden der Blockadestege 29 aufweist, in den Zwischenraum 28 eingeschraubt, so werden dadurch die Blockadestege 29 geringfügig nach außen gedrückt und ein Zusammendrücken der Spreizhaken 22 und 23 ist zuverlässig ausgeschlossen.

Zur Fixierung des Rahmens 08 des PV-Moduls 02 am Tragprofil 03 wird zunächst der Klemmbügel 04 mit den beiden Klemmflächenabschnitten 09 und 10 im Bereich der Eckkante 11 des Rahmens 08 angelegt, und die Rastelemente 18 in der entsprechenden Position an den Gegenrastelementen 21 eingerastet. Nach dem ersten Einrasten der Gegenrastelemente 21 an den Rastelementen 18 kann der Klemmbügel 04 mit seinem Bügelarm 15 weiter in Richtung des Tragprofils 03 rutschen. Wird nun die Spannschraube 06 weiter eingeschraubt und dadurch die Endklemme 01 gespannt, so wirkt im Klemmflächenabschnitt 09 eine von oben auf den Rahmen 08 wirkende Normalkraft, die den Rahmen 08 gegen das Trägerprofil 03 drückt und entsprechend fixiert. Außerdem wirkt durch die Fixierung des unteren Endes des Bügelarms 15 und das gleichzeitige Anziehen der Spannschraube 06 ein Kippmoment auf den Klemmbügel 04, so dass der Klemmbügel 04 mit dem Klemmflächenabschnitt 10 seitlich gegen den Rahmen 08 drückt.

Man erkennt weiter, dass die Rastelemente 18 am Klemmbügel 04 und die Gegenrastelemente 21 am Konsolenelement 05 jeweils in der Art einer Verzahnung ausgebildet sind. Beide Verzahnungen sind formkomplementär gestaltet, so dass die Verzahnung ineinandergreifen kann. Die Verzahnung an der Stützfläche 17 weist mit den freien Enden in Richtung der Klemmfläche 03, so dass ein Formschluss zwischen Klemmbügel 04 und Konsolenelement 05 bei einer Krafteinleitung in Richtung des Tragprofils 03 ausgeschlossen ist. Aufgrund der winkligen Anordnung können die Rastelement 18 und die Gegenrastelement 21 problemlos gegeneinander verschoben werden, solange der Andruck der Stützfläche 17 gegen die Kontaktfläche 20 unterhalb einer bestimmten Flächenpressung liegt. Sobald die Klemmfläche gegen den Rahmen 08 des PV-Moduls gespannt wird, steigt der Andruck der Stützfläche 17 gegen die Kontaktfläche 20 über diese Schwelle an. Ab dann sind die Rastelemente 18 kraftschlüssig und reibschlüssig an den Gegenrastelementen 21 in der Kontaktfläche 20 des Konsolenelements 05 fixiert.

Dadurch, dass sowohl am Spreizhaken 22 als auch am Spreizhaken 23 jeweils Kontaktflächen 20 mit Gegenrastelementen 21 vorgesehen sind, kann das Konsolenelement in beiden möglichen Montagepositionen am Tragprofil 03 befestigt werden.

Sobald der Klemmbügel 04 ausreichend gegen den Rahmen 08 gespannt ist und auf diese Weise das PV-Modul 02 am Trägerprofil 03 fixiert ist, kann die Kontaktschraube 12 eingeschraubt und dadurch die Spitze 13 in die Oberfläche des Rahmens 08 eingerückt werden. Auf diese Weise wird ein zuverlässiger Erdungskontakt zwischen dem Rahmen 08 und der Endklemme 01 realisiert.

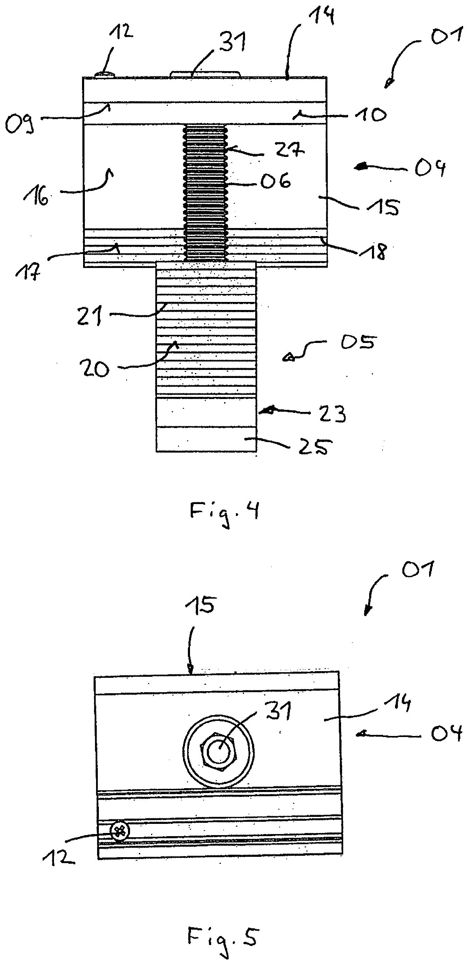

**Fig. 4** zeigt die Endklemme 01 in seitlicher Ansicht. Man erkennt, dass die Anzahl der Rastelemente 18 in der Stützfläche 17 des Klemmbügels 04 kleiner als die Anzahl der Gegenrastelemente 21 in der Kontaktfläche 20 des Konsolenelements ist. Dadurch wird es ermöglicht, dass mit der Endklemme 01 unterschiedliche PV-Module mit unterschiedlich hohen Rahmen 08 fixiert werden können. Abhängig von der Höhe des Rahmens 08 kann nämlich der Klemmbügel 04 in unterschiedlichen Höhe am Konsolenelement 05 eingerastet und somit anforderungsgerecht fixiert werden.

**Fig. 5** zeigt die Endklemme 01 mit dem Schraubenkopf 31 der Spannschraube 06 und der Kontaktschraube 12 in Ansicht von oben.

## Patentansprüche

1. Endklemme (01) zur Befestigung eines gerahmten PV-Moduls (02) auf einem Tragprofil (03), mit einem Konsolenelement (05), das am Tragprofil (03) befestigbar ist, und mit einem Klemmbügel (04) zum Niederhalten des Rahmens (08) des PV-Moduls (02), wobei der Klemmbügel (04) zumindest eine Klemmfläche (07) aufweist, die beklemmend am Rahmen (08) des PV-Moduls (02) zur Anlage bringbar ist, und wobei der Klemmbügel (04) eine Stützfläche (17) aufweist, die den Klemmbügel (04) abstützend seitlich an einer Kontaktfläche (20) des Konsolenelements (05) zur Anlage bringbar ist, und wobei zwischen Klemmbügel (04) und Konsolenelement (05) eine Spannschraube (06) im Eingriff steht, mit der der Klemmbügel (04) zum Niederhalten des Rahmens (08) des PV-Moduls (02) gegen das Konsolenelement (05) gespannt werden kann, wobei an der Stützfläche (17) des Klemmbügels (04) zumindest ein Rastelement (18) vorgesehen ist, das an einem formkomplementären Gegenrastelement (21) in der Kontaktfläche (20) des Konsolenelements (05) kraftschlüssig und/oder reibschlüssig fixierbar ist, wobei durch den Kraftschluss und/oder Reibschluss zwischen Rastelement (18) und Gegenrastelement (21) eine Annäherung der Stützfläche (17) des Klemmbügels (04) in Richtung des Tragprofils (03) ausgeschlossen ist **dadurch gekennzeichnet,**
**dass** das Konsolenelement (05) zwei elastisch federnd angelenkte Spreizhaken (22, 23) umfasst, die in einer Ausnehmung (30) des Tragprofils (03) befestigbar sind, wobei die Spreizhaken (22, 23) jeweils ein Hakenelement (24, 25) aufweisen, das den Rand der Ausnehmung (30) fixierend hintergreifen kann, und wobei die beiden Spreizhaken (22, 23) elastisch federnd einander angenähert werden können, um den Hintergriff der Hakenelemente (24, 25) am Rand der Ausnehmung (30) zu lösen, wobei zwischen den beiden Spreizhaken (22, 23) ein Zwischenraum (28) gebildet ist, in den die Spannschraube (06) beim Spannen der Endklemme (01) eingeführt wird, wobei auf der zur Spannschraube (06) weisenden Innenseite der Spreizhaken (22, 23) jeweils zumindest ein Blockadesteg (29) angeformt ist, die mit einem freien Ende am Gewindegang (27) der Spannschraube (06) zur Anlage kommen können und dadurch eine elastisch federnde Annäherung der Spreizhaken (22, 23) blockieren.

2. Endklemme nach Anspruch 1,
**dadurch gekennzeichnet,**
**dass** die Anzahl der Gegenrastelemente (21) in der Kontaktfläche (20) des Konsolenelements (05) größer als die Anzahl der Rastelemente (18) an der Stützfläche (17) des Klemmbügels (04) ist.

3. Endklemme nach Anspruch 1 oder 2,
**dadurch gekennzeichnet,**
**dass** Rastelemente (18) und Gegenrastelemente (21) in der Art einer formkomplementären Verzahnung ausgebildet sind.

4. Endklemme nach Anspruch 3,
**dadurch gekennzeichnet,**
**dass** die Verzahnung winkelig von der Stützfläche (17) des Klemmbügels (04) absteht und die freien Enden der Verzahnung in Richtung der Klemmfläche (07) weisen.

5. Endklemme nach einem der Ansprüche 1 bis 4,
**dadurch gekennzeichnet,**
**dass** die Klemmfläche (07) des Klemmbügels (04) zwei Klemmflächenabschnitte (09, 10) umfasst, die rechtwinklig zueinander verlaufen und eine Eckkante (11) des Rahmens (08) des PV-Moduls (02) umgreifen können.

6. Endklemme nach einem der Ansprüche 1 bis 5,
**dadurch gekennzeichnet,**
**dass** die Stützfläche (17) einen Überstand (19) gegenüber der zur Spannschraube (06) weisenden Innenseite (16) des Klemmbügels (04) aufweist.

7. Endklemme nach Anspruch 1,
**dadurch gekennzeichnet,**
**dass** der Durchmesser des Gewindegangs (27) der Spannschraube (06) geringfügig größer ist als der Abstand zwischen den freien Enden der gegenüberliegenden Blockadestege (29).

8. Endklemme nach einem der Ansprüche 1 bis 7,
**dadurch gekennzeichnet,**
**dass** der Klemmbügel (04) zwei winkelig zueinander verlaufende Bügelarme (14, 15) umfasst, wobei die Klemmfläche (07) am ersten Bügelarm (14) angeordnet ist, und wobei die Stützfläche (17) am zweiten Bügelarm (15) angeordnet ist.

9. Endklemme nach Anspruch 8,
**dadurch gekennzeichnet,**
**dass** der von den beiden Bügelarmen (14, 15) eingeschlossene Zwischenwinkel kleiner oder größer 90 Grad ist.

10. Endklemme nach Anspruch 9,
**dadurch gekennzeichnet,**
**dass** der von den beiden Bügelarmen (14, 15) eingeschlossene Zwischenwinkel im Bereich zwischen 89 Grad und 85 Grad oder im Bereich zwischen 91 Grad und 95 Grad liegt.

11. Endklemme nach einem der Ansprüche 1 bis 10,
**dadurch gekennzeichnet,**
**dass** am Klemmbügel (04) ein Erdungselement vorgesehen ist, mit dem ein elektrisch leitender Kontakt zwischen dem Klemmbügel (04) und dem Rahmen (08) des PV-Moduls (02) herstellbar ist.

12. Endklemme nach Anspruch 11,
**dadurch gekennzeichnet,**
**dass** das Erdungselement in der Art einer Kontaktschraube (12) ausgebildet ist, deren dem Schraubenkopf gegenüberliegendes freie Ende eine Spitze (13) aufweist, die in die Oberfläche des Rahmens (08) des PV-Moduls (02) eingedrückt werden kann.

13. Endklemme nach Anspruch 12,
**dadurch gekennzeichnet,**
**dass** die Spitze (13) der Kontaktschraube (12) in der Klemmfläche (07) des Klemmbügels (04) angeordnet ist.

## Claims

1. An end clamp (01) for fixing a framed PV module (02) on a support profile (03), the end clamp (01) comprising a console element (05) which can be fixed to the support profile (03), and comprising a clamp strap (04) for holding down the frame (08) of the PV module (02), the clamp strap (04) having at least one clamping surface (07) which can come into contact with the frame (08) of the PV module (02) in a clamping manner, and the clamp strap (04) having a supporting surface (17) which can laterally come into contact with a contact surface (20) of the console element (05) while supporting the clamp strap (04), and a turnbuckle (06) engaging between the clamp strap (04) and the console element (05), the turnbuckle (06) being configured to tighten the clamp strap (04) against the console element (05) to hold down the frame (08) of the PV module (02), at least one fixing element (18) being provided at the supporting surface (17) of the clamp strap (04), wherein the fixing element (18) can be fixed in a positive and/or frictional manner to a complementarily shaped counter fixing element (21) in the contact surface (20) of the console element (05), the supporting surface (17) of the clamp strap (04) being precluded from approaching the support profile (03) by the positive mechanical engagement and/or frictional connection between the fixing element (18) and the counter fixing element (21),
**characterized in that**
the console element (05) comprises two expanding hooks (22, 23) which are hinged in an elastic manner and which can be fixed in a recess (30) of the support profile (03), wherein the expanding hooks (22, 23) each have a hook element (24, 25) which can engage behind the edge of the recess (30) in a fixing manner, and wherein the two expanding hooks (22, 23) can be moved toward each other in an elastic manner in order to break the engagement of the hook elements (24, 25) on the edge of the recess (30), a gap (28) being realized between the two expanding hooks (22, 23), the turnbuckle (06) being inserted into said gap (28) when the end clamp (01) is tightened, wherein at least one blocking bar (29) is formed on the inside of the expanding hooks (22, 23) pointing towards the turnbuckle (06), wherein a free end of the blocking bars (29) can come into contact with the thread (27) of the turnbuckle (06), thereby blocking the expanding hooks (22, 23) from being elastically moved toward each other.

2. The end clamp according to claim 1,
**characterized in that**
the number of counter fixing elements (21) in the contact surface (20) of the console element (05) is higher than the number of fixing elements (18) at the supporting surface (17) of the clamp strap (04).

3. The end clamp according to claim 1 or 2,
**characterized in that**
the fixing elements (18) and the counter fixing elements (21) are realized in the manner of a gearing which has a complementary shape.

4. The end clamp according to claim 3,
**characterized in that**
the gearing projects at angle from the supporting surface (17) of the clamp strap (04) and the free ends of the gearing point towards the clamping surface (07).

5. The end clamp according to any one of claims 1 to 4,
**characterized in that**
the clamping surface (07) of the clamp strap (04) comprises two clamping surface sections (09, 10) which extend perpendicularly to one another and which can grip a corner edge (11) of the frame (08) of the PV module (02).

6. The end clamp according to any one of claims 1 to 5,
**characterized in that**
the supporting surface (17) has a protrusion (19) in relation to the inside (16) of the clamp strap (04) which points to the turnbuckle (06).

7. The end clamp according to claim 1,
**characterized in that**
the diameter of the thread (27) of the turnbuckle (06) is slightly larger than the distance between the free ends of the opposite blocking bars (29).

8. The end clamp according to any one of claims 1 to 7,
**characterized in that**
the clamp strap (04) comprises two strap arms (14, 15) which extend at angle to one another, the clamping surface (07) being disposed at the first strap arm (14) and the supporting surface (17) being disposed at the second strap arm (15).

9. The end clamp according to claim 8,
**characterized in that**
the intermediate angle between the two strap arms (14, 15) is smaller or larger than 90 degrees.

10. The end clamp according to claim 9,
**characterized in that**
the intermediate angle between the two strap arms (14, 15) is in the range between 89 degrees and 85 degrees or in the range between 91 degrees and 95 degrees.

11. The end clamp according to any one of claims 1 to 10,
**characterized in that**
a grounding element is provided at the clamp strap (04), the grounding element being configured to establish an electrically conductive contact between the clamp strap (04) and the frame (08) of the PV module (02).

12. The end clamp according to claim 11,
**characterized in that**
the grounding element is realized in the manner of a contact screw (12) whose free end opposite to the screw head has a tip (13) which can be pushed in the surface of the frame (08) of the PV module (02).

13. The end clamp according to claim 12,
**characterized in that**
the tip (13) of the contact screw (12) is disposed in the clamping surface (07) of the clamp strap (04).

## Revendications

1. Pince d'extrémité (01) pour fixer un module PV (02) à cadre sur un profilé de support (03), la pince d'extrémité (01) comprenant un élément de console (05) configuré pour être fixé au profilé de support (03) et un étrier de serrage (04) pour maintenir en place le cadre (08) du module PV (02), l'étrier de serrage (04) ayant au moins une surface de serrage (07) configurée pour venir en contact serrant avec le cadre (08) du module PV (02), et l'étrier de serrage (04) ayant une surface de support (17) configurée pour venir en contact latéral avec une surface de contact (20) de l'élément de console (05) tout en supportant l'étrier de serrage (04), et une vis de serrage (06) étant en prise entre l'étrier de serrage (04) et l'élément de console (05), la vis de serrage (06) étant configurée pour serrer l'étrier de serrage (04) contre l'élément de console (05) afin de maintenir en place le cadre (08) du module PV (02), la surface de support (17) de l'étrier de serrage (04) étant munie d'au moins un élément d'encliquetage (18) configuré pour être fixé par liaison par force et/ou friction à un contre-élément d'encliquetage (21) en forme complémentaire dans la surface de contact (20) de l'élément de console (05), la liaison par force et/ou friction entre l'élément d'encliquetage (18) et le contre-élément d'encliquetage (21) empêchant la surface de support (17) de l'étrier de serrage (04) d'approcher le profilé de support (03),
**caractérisée en ce que**
l'élément de console (05) comprend deux crochets d'expansion (22, 23) articulés élastiquement qui sont configurés pour être fixés dans un évidement (30) du profilé de support (03), les crochets d'expansion (22, 23) ayant chacun un élément de crochet (24, 25) configuré pour venir en prise derrière le bord de l'évidement (30) de manière fixante, et les deux crochets d'expansion (22, 23) étant configurés pour être approchés élastiquement l'un à l'autre afin d'éliminer la prise des éléments de crochet (24, 25) derrière le bord de l'évidement (30), un espace (28) étant formé entre les deux crochets d'expansion (22, 23) dans lequel la vis de serrage (06) est insérée quand la pince d'extrémité (01) est serrée, au moins une âme de blocage (29) étant formée sur le côté intérieur des crochets d'expansion (22, 23) tourné vers la vis de serrage (06), une extrémité libre des âmes de blocage (29) étant configurée pour venir en contact avec le filet (27) de la vis de serrage (06), bloquant ainsi l'approche élastique des crochets d'expansion (22, 23).

2. Pince d'extrémité selon la revendication 1,
**caractérisée en ce que**
le nombre de contre-éléments d'encliquetage (21) dans la surface de contact (20) de l'élément de console (05) est supérieur au nombre d'éléments d'encliquetage (18) sur la surface de support (17) de l'étrier de serrage (04).

3. Pince d'extrémité selon la revendication 1 ou 2,
**caractérisée en ce que**
les éléments d'encliquetage (18) et les contre-éléments d'encliquetage (21) sont des dentures de forme complémentaire.

4. Pince d'extrémité selon la revendication 3,
**caractérisée en ce que**
la denture fait saillie angulaire sur la surface de support (17) de l'étrier de serrage (04) et les extrémités libres de la denture sont tournées vers la surface de serrage (07).

5. Pince d'extrémité selon l'une quelconque des revendications 1 à 4,
**caractérisée en ce que**
la surface de serrage (07) de l'étrier de serrage (04) comprend deux parties de surface de serrage (09, 10) qui sont perpendiculaires l'une à l'autre et configurées pour venir en prise autour d'un bord de coin (11) du cadre (08) du module PV (02).

6. Pince d'extrémité selon l'une quelconque des revendications 1 à 5,
**caractérisée en ce que**
la surface de support (17) a une saillie (19) par rapport au côté intérieur (16) de l'étrier de serrage (04) tourné vers la vis de serrage (06).

7. Pince d'extrémité selon la revendication 1,
**caractérisée en ce que**
le diamètre du filet (27) de la vis de serrage (06) est légèrement supérieur à la distance entre les extrémités libres des âmes de blocage (29) opposées.

8. Pince d'extrémité selon l'une quelconque des revendications 1 à 7,
**caractérisée en ce que**
l'étrier de serrage (04) comprend deux bras de serrage (14, 15) qui s'étendent angulairement l'un à l'autre, la surface de serrage (07) étant disposée sur le premier bras de serrage (14) et la surface de support (17) étant disposée sur le deuxième bras de serrage (15).

9. Pince d'extrémité selon la revendication 8,
**caractérisée en ce que**
l'angle intermédiaire entre les deux bras de serrage (14, 15) est inférieur ou supérieur à 90 degrés.

10. Pince d'extrémité selon la revendication 9,
**caractérisée en ce que**
l'angle intermédiaire entre les deux bras de serrage (14, 15) est dans la gamme entre 89 degrés et 85 degrés ou dans la gamme entre 91 degrés et 95 degrés.

11. Pince d'extrémité selon l'une quelconque des revendications 1 à 10,
**caractérisée en ce que**
l'étrier de serrage (04) est muni d'un élément de mise à la terre configuré pour établir un contact électriquement conducteur entre l'étrier de serrage (04) et le cadre (08) du module PV (02).

12. Pince d'extrémité selon la revendication 11,
**caractérisée en ce que**
l'élément de mise à la terre est une vis de contact (12) dont l'extrémité libre opposée à la tête de vis a une pointe (13) qui peut être poussée dans la surface du cadre (08) du module PV (02).

13. Pince d'extrémité selon la revendication 12,
**caractérisée en ce que**
la pointe (13) de la vis de contact (12) est disposée dans la surface de serrage (07) de l'étrier de serrage (04).
